# EUROPEAN PATENT APPLICATION

(11) **EP 1 132 787 A1**
(43) Date of publication of application: **12.09.2001**
(21) Application number: 00961064.3
(22) Date of filing: 18.09.2000
(51) Int. Cl.: G05B 9/02, B25J 19/06

(54) **PRODUCTION FACILITY CONTROL SYSTEM**

(30) Priority: 16.09.1999 JP 26241499
(71) Applicant: THE NIPPON SIGNAL CO. LTD., Tokyo 100-0005 (JP)
(72) Inventor: SAKAI, Masayoshi, c/o Yono Off The Nippon Signal, Urawa-shi, Saitama 338-0804 (JP); FUTSUHARA, Koichi, c/o Yono Off The Nippon Signal, Urawa-shi, Saitama 338-0804 (JP)
(74) Representative: Jenkins, Peter David
(86) International application number: JP0006362
(87) International publication number: WO0120410

(57) **Abstract**

The invention relates to a control system for production facilities having machine-movable sections, wherein safety evaluation of the system is simplified. A safety related circuit section (1) and a non-safety related circuit section (2) are isolated from each other circuitwise. The safety related circuit section (1) has a function for participating in collision avoidance between a machine-movable section (4) and a person, and is provided with a characteristic for generating high level energy only in the case where it is normal in itself, and generating low level energy when there is a fault in itself. The non-safety related circuit section (2) has a function for controlling an operation of the machine-movable section (4), and is related with the safety related circuit section (1) so that control of the operation of the machine-movable section (4) is only possible when the safety related circuit section (1) is generating high level energy

## Description

### TECHNICAL FIELD

The present invention relates to a control system for production facilities having machine-movable sections, and in particular to technology related to system safety.

### BACKGROUND ART

In production facilities having machine-movable sections, the prime function of a system for controlling such production facilities is operations related to production efficiency and product quality, such as the operation position, speed, torque etc. of the machine-movable sections. However, in the case where a serious accident could occur due to collision of a machine-movable section with a person, a function for collision avoidance is necessary.

In this specification, the part for realizing the prime function of the system for controlling production facilities which is not necessarily related to safety, is referred to as a non-safety related circuit section, while the part for realizing the function for collision avoidance between machine-movable sections and a person is referred to as a safety related circuit section. Since the non-safety related circuit section performs extremely advanced operations, the construction thereof is complex. Normally, this involves computer control. On the other hand, compared to the non-safety related circuit section, the safety related circuit section is far simpler.

In the control system for production facilities of this type, if the safety related circuit section fails, the function for collision avoidance between machine-movable sections and a person is lost. Consequently, the safety related circuit section is required to have a property not to err to the danger side when fails, and to certify the safety thereof.

However, in conventional control systems for production facilities of this type, the non-safety related circuit section and the safety related circuit section are not isolated, and are constructed as wholly combined circuits using PLCs (Programmable Logic Controllers, generally called sequencers).

Therefore, in order to certify the safety of the safety related circuit section, besides the safety of the safety related circuit section itself, it has been necessary to certify that a fault of the non-safety related circuit section does not have an influence on the safety related circuit section. The function of the non-safety related circuit section is complex, and hence the operation for analyzing the influence of such a fault is extremely complicated. Furthermore, in the case where the non-safety related circuit section is modified, it is necessary to evaluate for each modification, that the result of the modification does not have an influence on the safety related circuit section, and this evaluation operation is extremely onerous.

The present invention takes into consideration the above situation, with the object of providing a control system for production facilities whereby safety evaluation of the control system for production facilities is simplified. Furthermore, it is an object to provide a control system for production facilities where, irrespective of what modifications are made to a non-safety related circuit section, these modifications do not have an influence on the safety evaluation of a safety related circuit section.

### DISCLOSURE OF THE INVENTION

For this purpose, the control system for production facilities according to the present invention comprises; a safety related circuit section and a non-safety related circuit section, wherein the safety related circuit section and the non-safety related circuit section are isolated from each other circuitwise, the safety related circuit section has a function for participating in collision avoidance between a machine-movable section and a person and is provided with a characteristic for generating high level energy only in the case where it is normal in itself and for generating low level energy when there is a fault in itself, and the non-safety related circuit section has a function for controlling an operation of the machine-movable section and is related with the safety related circuit section so that a control of the operation of the machine-movable section is only possible when the safety related circuit section is generating the high level energy.

As described above, the control system for production facilities according to the present invention comprises the non-safety related circuit section. The non-safety related circuit section has the function for controlling the operation of the machine-movable section. Accordingly, the non-safety related circuit section can perform the main operations related to production efficiency and product quality, such as the operation position, speed, torque etc. of the machine-movable section.

Furthermore, the control system for production facilities according to the present invention comprises the safety related circuit section. The safety related circuit section has the function for participating in collision avoidance between the machine-movable section and a person, and can thus prevent an occurrence of a serious accident due to collision between the machine-movable section and a person.

Furthermore, the safety related circuit section is provided with the characteristic for generating the high level energy only in the case where it is normal in itself, and generating the low level energy when there is a fault in itself, and the non-safety related circuit section is related with the safety related circuit section so that the control of the operation of the machine-movable section is only possible when the safety related circuit section is generating the high level energy. Accordingly, only when the safety related circuit section is operating normally, the operation control of the machine-movable section by the non-safety related circuit section becomes possible. In the case where the safety related circuit section fails, energy of a high level is not generated, and hence the operation control of the machine-movable section by the non-safety related circuit section is not performed. Consequently, at the time of a fault in the safety related circuit section, collision between the machine-movable section and a person is reliably avoided.

With the control system for production facilities according to the present invention, as the characteristic thereof, the safety related circuit section and the non-safety related circuit section are isolated from each other circuitwise. With such a construction, safety evaluation of the control system may be performed only for the safety related circuit section, and hence evaluation of safety becomes extremely simple. Furthermore, irrespective of what modifications are made to the non-safety related circuit section, these modifications do not have an influence on the safety evaluation of the safety related circuit section.

Preferably, the safety related circuit section is supplied with input signals including; an operator manual stop operation signal, a start operation signal based on manual or automatic operation, an absence detection signal indicative of operator absence from an area where collision is possible, and an operation intention detection signal for at the time of manual operation. With such a construction, it is possible to realize a construction of a collision avoidance section which takes into consideration an operating mode of machinery and equipment.

Yet another aspect of the control system for production facilities according to the present invention may comprise a monitoring section. The monitoring section monitors an operating range of the machine-movable section, and a speed of the machine-movable section, and supplies a monitoring signal to the safety related circuit section.

According to a preferred embodiment of the invention, the operation of the machine-movable section is possible based on the operating intention of the operator, while verifying the operating condition of the machine-movable section. Therefore safety at the time of manual operation is improved.

### BRIEF DESCRIPTION OF THE DRAWINGS

FIG. 1 is a block diagram showing an embodiment of a control system for production facilities according to the present invention.
FIG. 2 is a diagram showing a specific circuit configuration of a safety related circuit section contained in the control system for production facilities according to the present invention.
FIG. 3 is a time chart for explaining an operation of a self-hold section contained in the control system for production facilities according to the present invention.
FIG. 4 is a time chart for explaining an on-delay circuit contained in the control system for production facilities according to the present invention and an operation of the off-delay section.
FIG. 5 is a diagram showing a specific circuit example of a pre-processing section contained in the control system for production facilities according to the present invention.
FIG. 6 is a block diagram showing a specific example of a monitoring section added to the pre-processing section shown in FIG. 5.
FIG. 7 is a waveform diagram for explaining an operation of an over-speed monitoring section contained in the monitoring section shown in FIG. 6.

### BEST MODE FOR CARRYING OUT THE INVENTION

Hereunder is a description of a control system for production facilities according to the present invention, based on the appended drawings.

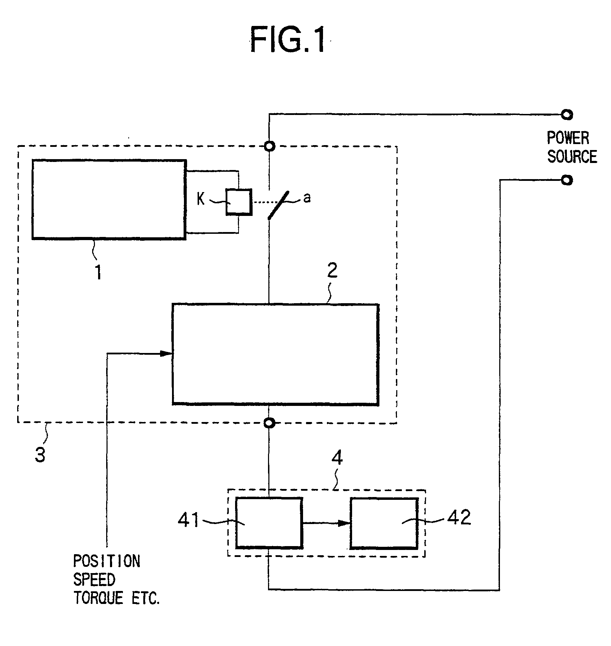

FIG. 1 is a block diagram showing an embodiment of the control system for production facilities according to the present invention.

A control system 3 for production facilities shown in the figure comprises a safety related circuit section 1 and a non-safety related circuit section 2.

The safety related circuit section 1 has a function for participating in collision avoidance between a machine-movable section 4 and a person (collision avoidance function), and is provided with a characteristic for generating high level energy only in the case where it is normal in itself, and generating low level energy when there is a fault in itself. A final output from the safety related circuit section 1 is shown by a contact point a of an electromagnetic relay K. When energy of a high level is generated at both ends of a coil of the electromagnetic relay K, the contact point a is closed. Only when the contact point a of the safety related circuit section 1 is closed, the operation of the machine-movable section 4 by the non-safety related circuit section 2 becomes possible.

The non-safety related circuit section 2 has a function for controlling an operation of the machine-movable section 4. The non-safety related circuit section 2 does not participate in collision avoidance between the machine-movable section 4 and a person. Consequently, certification of safety related with the non-safety related circuit section 2 is not necessary, and at the time of modification of the non-safety related circuit section 2, re-evaluation of safety is also not necessary. For example, an inverter or a servo power supply corresponds to the non-safety related circuit section 2, and adjusts the power supply to control output energy from a power source 41 contained within the machine-movable section 4. The output energy from the power source 41 is supplied to a mechanical load 42.

The non-safety related circuit section 2 is related with the safety related circuit section 1 so that the operation of the machine-movable section 4 can be controlled only when the safety related circuit section 1 is generating the high level energy. Such a relation is achieved in this embodiment by the electromagnetic relay K. That is to say, only when energy of a high level is generated at the both ends of the coil of the electromagnetic relay K so that the contact point a thereof is closed, the operation of the machine-movable section 4 by the non-safety related circuit section 2 becomes possible.

In the above described manner, the control system for production facilities according to the present invention comprises the non-safety related circuit section 2. The non-safety related circuit section 2 has the function of controlling the operation of the machine-movable section 4. Accordingly, the non-safety related circuit section 2 can perform the main operations related to production efficiency and product quality, such as the operation position, speed, torque etc. of the machine-movable section 4.

Furthermore, the control system for production facilities according to the present invention comprises the safety related circuit section 1. The safety related circuit section 1 has the function for participating in collision avoidance between the machine-movable section 4 and a person, and can thus prevent an occurrence of a serious accident due to collision between machine-movable section 4 and a person.

Furthermore, the safety related circuit section 1 is provided with a characteristic for generating high level energy only in the case where it is normal in itself, and generating low level energy when there is a fault in itself, and the non-safety related circuit section 2 is related with the safety related circuit section 1 so that the operation of the machine-movable section 4 can be controlled only when the safety related circuit section 1 is generating the high level energy. Accordingly, only when the safety related circuit section 1 is operating normally, the operation control of the machine-movable section 4 by the non-safety related circuit section 2 becomes possible. In the case where the safety related circuit section 1 fails, energy of a high level is not generated, and hence the operation of the machine-movable section 4 by the non-safety related circuit section 2 is not controlled. Consequently, at the time of a fault in the safety related circuit section 1, collision between the machine-movable section 4 and a person is reliably avoided.

With the control system for production facilities according to the present invention, as the characteristic thereof, the safety related circuit section 1 and the non-safety related circuit section 2 are isolated from each other circuitwise. With such a construction, safety evaluation of the control system may be performed only for the safety related circuit section 1, and hence evaluation of safety becomes extremely simple. Furthermore, irrespective of what modifications are made to the non-safety related circuit section 2, these modifications do not have an influence on the safety evaluation of the safety related circuit 1.

The safety related circuit section 1, preferably, is supplied with input signals containing; an operator manual stop operation signal, a start operation signal based on manual or automatic operation, an absence detection signal indicative of operator absence from an area where collision is possible, and an operation intention detection signal for at the time of manual operation. Only when the signals contained in the input signals are a high level, energy of a high level is generated. With such a construction, it is possible to realize a construction of a collision avoidance section which takes into consideration the operating mode of machinery.

That is to say, the operation of the machinery is normally a periodic operation of one cycle. However, the operating modes are diverse, for example; an operating mode with one cycle performed continuously several times, an operating mode where the operation is started by a start operation by an operator and stopped in one cycle, or an operating mode for one cycle operation with the operation being stopped half way. With the above described preferable construction, by providing manual operations of three types, namely an operation start command, an operation stop command, and an operation continue command, then even if the operating modes are diverse, it is possible to construct a section which participates in collisions independently of the operating modes.

In particular, paying attention to interference between the automatic operation and manual operation, it is possible to realize a means for preventing non-intentional startup accompanying operating mode switching. With the manual operation, it is required for the machine-movable section 4 to faithfully follow the operation intention of the operator. That is to say, such a situation must be avoided, where the machine-movable section 4 is erroneously operated due for example to an operation command on the machine side, in spite of no operation intention of the operator at the time of manual operation. With the abovementioned preferred embodiment, such an erroneous situation can be avoided.

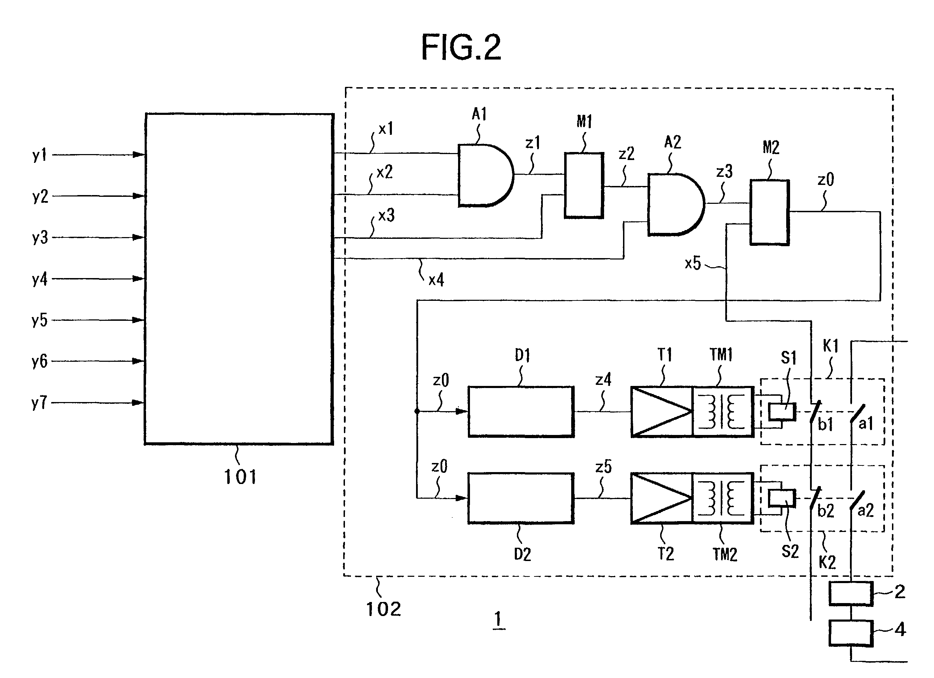

FIG. 2 is a diagram showing a specific circuit configuration of a safety related circuit section contained in the control system for production facilities according to the present invention. This figure shows the abovementioned preferred example.

In FIG. 2, the safety related circuit section 1 contains a pre-processing section 101 and a signal processing section 102.

The pre-processing section 101 converts input signals y1 to y7 into signals x1 to x4 and outputs converted signals. The contents of the input signals y1 to y7 supplied to the pre-processing section 101 are for example as follows.

### (Input signal y1)

The input signal y1 is a manual stop operation signal. The manual stop operation signal y1 becomes a low level L when a stop operation is performed for the machine-movable section 4, and is a high level H at other times.

### (Input signal y2)

The input signal y2 is a start operation signal. The start operation signal y2 becomes a high level H when a start operation is performed for the machine-movable section 4, and is a low level L when there is no start signal. In the start operation, both a start operation for automatic operation and a start operation for manual operation are included.

### (Input signal y3)

The input signal y3 is an operation intention detection signal. The operation intention detection signal y3 becomes a high level H when an operation is performed based on the operation intention of an operator.

### (Input signal y4)

The input signal y4 is an absence detection signal. The absence detection signal y4 becomes a high level H when it is detected that there is no person within a movable range of the machine-movable section 4. The absence detection signal y4 becomes a low level L when there is a person within the movable range of the machine-movable section 4.

### (Input signal y5)

The input signal y5 is an automatic operation signal. The automatic operation signal y5 becomes a high level H when an operation is performed for automatic operation.

### (Input signal y6)

The input signal y6 is a manual operation signal. The manual operation signal y6 becomes a high level H when an operation is performed for manual operation. The automatic operation signal y5 and the manual operation signal y6 are in a relation that when either one is a high level H, the other is a low level L.

### (Input signal y7)

The input signal y7 is a machine side operation command signal. The machine side operation command signal y7 becomes a high level H when a command is given for operating the machine-movable section 4. The pre-processing section 101 converts the abovementioned input signals y1 to y7 to signals x1 to x4 and outputs converted signals. The generation conditions for the signals x1 to x4 are as follows.

### (Generation condition for signal x1)

The signal x1 becomes a high level H, on condition that the manual stop operation signal y1 is a high level H (the stop operation is not being performed).

### (Generation condition for signal x2)

There are two cases where the signal x2 becomes a high level H. One is when the absence detection signal y4 is a high level H (person absent from the collision area), with the automatic operation signal y5 at a high level H.

The other is when it is verified that there is no interference from automatic operation, with the manual operation signal y6 at a high level H.

### (Generation condition for signal x3)

The signal x3 becomes a high level H when the start operation (automatic or manual) is performed normally, and the start operation signal y2 becomes a high level H.

### (Generation condition for signal x4)

There are two cases where the signal x4 becomes a high level H. One is when the operation intention detection signal y3 is a high level H, with the manual operation signal y6 at a high level H. The other is when the machine side operation command signal y7 is a high level H, with the automatic operation signal y5 at a high level H.

Next, the signal processing section 102 is provided with logical product operating sections A1, A2, self-hold sections M1, M2, amplifying sections T1, T2, electromagnetic relays K1, K2, an off-delay section D1, and an on-delay section D2. The respective sections are constituted by electrical circuits.

The signals x1 and x2 are input to the logical product operating section A1. The logical product operating section A1 generates a logical product signal z1 of a high level H when the signals x1 and x2 are both high levels H1. The signal x1, on the condition that the manual stop operation signal y1 is a high level H (the stop operation is not being performed) becomes a high level H, while the signal x2 becomes a high level H when the absence detection signal y4 is a high level H (person absent from the collision area), with the automatic operation signal y5 at a high level H. Consequently, one of the conditions where the logical product operating section A1 generates a logical product signal z1 of a high level H is:
(a) the stop operation is not being performed, and
(b) the automatic operation control is being performed, and a person is not present in the collision area. This is condition J1.

Furthermore, the signal x2 becomes a high level H when it is verified that there is no interference from automatic operation, with the manual operation signal y6 at a high level H. Consequently, another of the conditions where the logical product operating section A1 generates a logical product signal z1 of a high level is:
(c) stop operation is not being performed, and
(d) manual operation control is being performed, and it is verified that there is no interference from the automatic operation. This is condition J2.

The logical product signal z1 of a high level H generated by the logical product operating section A1 is supplied to a hold terminal of the self-hold section M1. The signal x3 is supplied to a trigger terminal of the self-hold section M1. The signal x3 becomes a high level H when the start operation (automatic or manual) is performed normally, and the start operation signal y2 becomes a high level H.

Consequently, the self-hold section M1 is triggered on the condition that the start operation (automatic or manual) is performed normally, and the signal x3 becomes a high level H, and self-holds the logical product signal z1 of a high level H supplied from the logical product operating section A1, to generate a self-hold output signal z2 of a high level H.

The condition where the logical product signal z1 becomes a high level H, is the case where, as already described, the condition J1 or the condition J2 is satisfied. Consequently, the self-hold output signal z2 output from the self-hold section M1 becomes a high level H, when the start operation (automatic or manual) is performed normally, and the condition J1 or the condition J2 is satisfied.

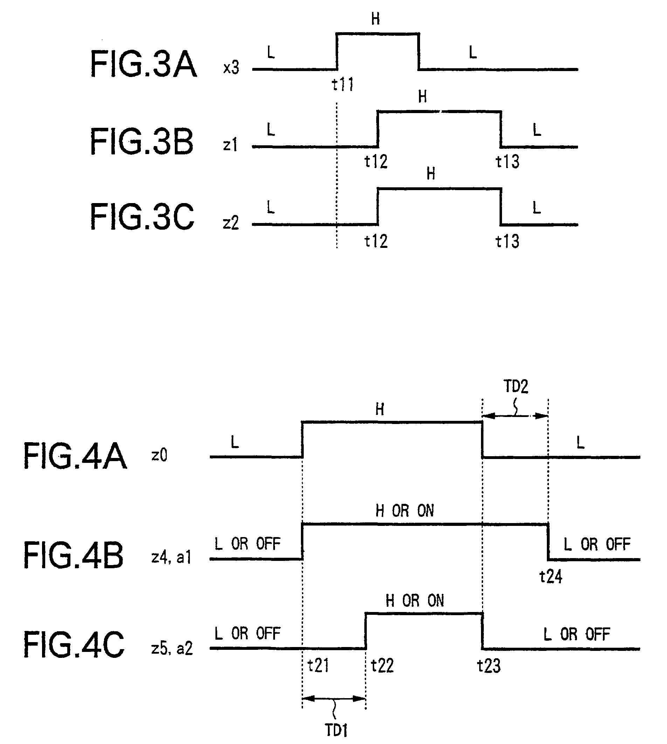

FIG. 3 is a time chart for explaining the operation of the self-hold section M1.

When the self-hold section M1 is triggered by the signal x3 of high level H supplied at time t11 (refer to FIG. 3A) and the logical product signal z1 of a high level H is input at time t12 (refer to FIG. 3B), a self-hold function is operated to generate a self-hold output signal z2 of a high level H (refer to FIG. 3C). The self-hold output signal z2 maintains a high level H thereof due to the self-hold function, even when the signal x3 being a trigger signal, becomes a low level L. The self-hold output signal z2 becomes a low level L at time t13 when the logical product signal z1 becomes a low level L and the self-hold is released.

The self-hold output signal z2 and the signal x4 are input to the logical product operating section A2. The logical product operating section A2 generates a logical product signal z3 of a high level H, when the self-hold output signal z2 and the signal x4 are both a high level H.

The self-hold output signal z2 becomes a high level H, when the start operation (automatic or manual) is normally performed and the condition J1 or the condition J2 are satisfied. The signal x4 becomes a high level H, when the operation intention detection signal y3 is a high level H with the manual operation signal y6 at a high level H, or when the machine side operation command signal y7 is a high level H with the automatic operation signal y5 at a high level H. Consequently, the condition where the logical product operating section A2 generates a logical product signal z3 of a high level H is:

(e) the start operation (automatic or manual) is performed normally, and the condition J1 or the condition J2 is satisfied, and

(f) the operation intention detection signal y3 is at a high level H with the manual operation signal y6 at a high level H, or the machine side operation command signal y7 is at a high level H with the automatic operation signal y5 at a high level H. This is condition J3.

The logical product signal z3 of a high level H generated by the logical product operating section A2, is supplied to a hold terminal of the self-hold section M2. The signal x5 is supplied to a trigger terminal of the self-hold section M2. The signal x5, in this embodiment, is supplied through a series connected circuit of the normally closed contact points b1, b2 of the electromagnetic relays K1, K2.

The self-hold circuit M2, when the signal x5 becomes a high level H (contact points b1, b2 on), and the logical product signal z3 supplied from the logical product operating section A2 becomes a high level H, operates to self-hold, and generates a self-hold output signal z0 of a high level H.

The condition where the logical product signal z3 becomes a high level H, is the case where, as already described, the condition J3 is satisfied. The operation of the self-hold section M2 is the same as for the self-hold section M1, and in the time charts shown in FIG. 3, the signal x3 may be replaced by the signal x5, the signal z1 by the signal z3, and the signal z2 by the signal z0.

The self-hold output signal z0 output from the self-hold section M2, is supplied to the off-delay section D1 and the on-delay section D2. The off-delay section D1 and the on-delay section D2 have input sides thereof connected in common, and output sides connected separately to the amplifying sections T1 and T2.

FIG. 4 is a time chart for explaining operations of the off-delay section D1 and the on-delay section D2.

When the self-hold output signal z0 of a high level H (refer to FIG. 4A) is supplied from the self-hold section M2 to the off-delay section D1 and the on-delay section D2 at time t21, the off-delay section D1 outputs a signal z4 of a high level H at time t21 for when the self-hold output signal z0 is input (refer to FIG. 4B). The on-delay section D2 outputs a signal z5 of a high level H at time t22 which is delayed by a previously determined on-delay time TD1 from time t21 for when the self-hold output signal z0 of a high level H is supplied (refer to FIG. 4C).

Next, when the self-hold output signal z0 becomes a low level L at time t23, the on-delay section D2 outputs the signal x5 of a low level L at time t23 for when the self-hold output signal z0 becomes a low level L (refer to FIG. 4C). The off-delay section D1 outputs the signal z4 of a low level L at time t24 which is delayed by a previously determined off-delay time TD2 from time t23 for when the self-hold output signal z0 becomes a low level L (refer to FIG. 4B).

The signals z4 and z5 output from the off-delay section D1 and the on-delay section D2 are supplied to the amplifying sections T1 and T2.

Output signals from the amplifying sections T1 and T2 are supplied via transformers TM1 and TM2 to excitation coils S1 and S2 of the electromagnetic relays K1 and K2, to sequentially excite the electromagnetic relays K1 and K2. When the electromagnetic relays K1 and K2 are excited, the contact points a1 and a2 are closed. Therefore, the non-safety related circuit section 2 becomes operable, and power is supplied to the machine-movable section 4 via the non-safety related circuit section 2. When the electromagnetic relays K1 and K2 are excited sequentially, the contact points b1 and b2 are sequentially opened, and at the point in the time when the contact point b1 is opened, the supply of the trigger signal x5 to the self-hold section M2 is cut off. However, as far as the signal z3 of a high level H is supplied to the self-hold section M2, the self-hold operation continues, and hence the self-hold output signal z0 of a high level H is maintained.

Operations of the contact points a1 and a2 follow the operations of the off-delay section D1 and the on-delay section D2 shown in the time chart of FIG. 4.

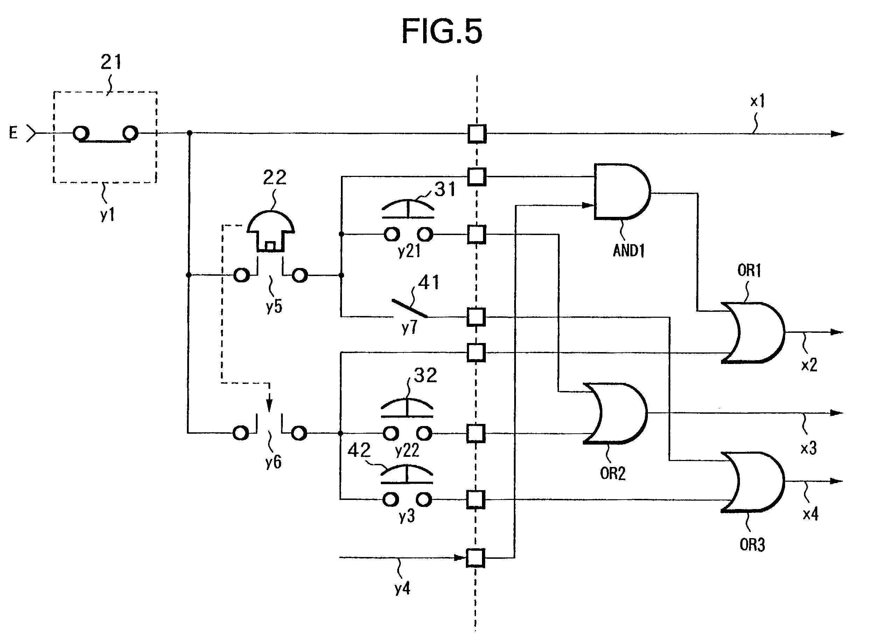

That is to say, when the self-hold output signal z0 of a high level H is supplied from the self-hold section M2 to the off-delay section D1 and the on-delay section D2 at time t21 (refer to FIG. 4A), the contact point a1 comes on approximately at time t21 for when the self-hold output signal z0 is input (refer to FIG. 4B. The contact point a2 comes on at time t22 which is delayed by the on-delay time TD1 of the on-delay section D2 (refer to FIG. 5 (c)).

Next, when the self-hold output signal z0 becomes a low level L at time t23, the contact point a1 goes off at time t24 which is delayed by the off-delay time TD2 of the off-delay section D1 (refer to FIG. 4B). The contact point a2 goes off at time t23 for when the self-hold output signal z0 becomes a low level L (refer to FIG. 4C). The power supply to the machine-movable section 4 is performed from time t22 for when the contact point a2 comes on, to time t23 for when the contact point a2 goes off.

The self-hold sections M1 and M2 and the logical product operation sections A1 and A2 shown in FIG. 2, are constructed such that an output of a high level H is generated when the input signals are a high level H, and the circuits themselves are normal. The on-delay section D2 and the off-delay section D1 are constructed such that an altemating current output is generated when the input signals are a high level H, and the circuits themselves are normal. The amplifying sections T1 and T2 are constructed such that a high level H is generated when there is an alternating current input signal, and the circuits themselves are normal (no self oscillation). Circuits provided with such characteristics are known for example from article such as "Development of Fail-safe Window Comparators/AND Gates and its Applications, by Kato, Sakai, Futuhara, Mukaidono, National Convention of the Institute of Electrical Engineers on Industrial Applications, No. 43 (August 1991)".

Furthermore, in FIG. 2, the sequential operation of the ON/OFF switching of a series duplex type switch is known from PCT Publication WO96/30923, which is able to realize a construction to avoid such a situation where a switch ON operation is performed while the sequential ON/OFF function is lost at the time of a fault. In FIG. 2, a transformer amplifying section is used, however instead of this, a semiconductor switch incorporating a function for continuously monitoring ON side faults may be used. Such a construction also, is disclosed in PCT Publication WO96/30923.

FIG. 5 is a diagram showing another specific circuit example of the pre-processing section 101.

The pre-processing section 101 shown in the figure, contains switches 21, 22, 31, 32, 41 and 42. These switches 21 through 42 generate a signal of a low level L when the contact points are opened (open circuit), and generate a signal of a high level H when the contact points are closed (short circuit).

In the figure, the switch 21 is a switch for opening contact points thereof when pressed. This switch 21 participates in the manual stop operation, being a switch for generating the manual stop operation signal y1. Normally the contact points are closed to generate the manual stop operation signal y1 of a high level H, while when pressed, the contact points are opened to generate the manual stop operation signal y1 of a low level L.

The switches 31 and 32 are switches for closing contact points thereof when pressed. The switches 31 and 32 generate start operation signals y21, y22. With the switches 31 and 32, normally the contact points are opened to generate the start operation signals y21, y22 of a low level L, while when pressed, the contact points are closed to generate the start operation signals y21, y22 of a high level H. The switch 31 is for start control of the automatic operation, while the switch 32 is for start control of the manual operation.

The switches 41 and 42 are switches for closing contact points thereof when pressed. The switch 41 is for operation continuation of automatic operation, and normally the contact points are opened to generate the machine side operation command signal y7 of a low level L, while when pressed, the contact points are closed to generate the machine side operation command signal y7 of a high level H.

The switch 42 is for operation continuation of the manual operation. Normally, the contact points are opened to generate the operation intention detection signal y3 of a low level L, while when pressed, the contact points are closed to generate the operation intention detection signal y3 of a high level H.

The switch 22 is a switch for generating the automatic operation signal y5 and the manual operation signal y6, meaning a switch for switching between automatic and manual, the construction being such that both are not closed at the same time. That is to say, the switch 22 is constructed such that when closed at a position for generating the automatic operation signal y5, it is always opened at the position for generating the manual operation signal y6, and conversely, when closed at the position for generating the manual operation signal y6, it is always opened at the position for generating the automatic operation signal y5. The switch 22 of this construction is already known as a tablet type for permitting travel of a train at a single track section of a railway signal system. In the case of production facilities, more specifically in the case where the operator performs manual operation, only after a tablet is pulled out from the position for generating the automatic operation signal y5 and inserted in the position for generating the manual operation signal y6, manual operation becomes possible. This means a construction which requires a reverse operation in the case where automatic operation is performed.

The high level H generated by the operation of the switches 21, 22, 31, 32, 41 and 42 is applied at a voltage value of power source E.

An AND (logical product gate) 1 takes the automatic operation signal y5 and the absence detection signal y4 as input signals, and generates a logical product signal thereof. An OR (logical sum gate) 1 takes the logical product signal supplied from the AND 1 and the manual operation signal y6 as input signals, and generates the signal x2 being the logical sum thereof.

An OR 2 takes the logical product signal of the automatic operation signal y5 and the start operation signal y21, and the logical product signal of the manual operation signal y6 and the start operation signal y22 as input signals, and generates the signal x3 being the logical sum thereof.

An OR 3 takes the logical product signal of the automatic operation signal y5 and the machine side operation command signal y7, and the logical product signal of the manual operation signal y6 and the operation intention detection signal y3 as input signals, and generates the signal x4 being the logical sum thereof.

In FIG. 5, when automatic operation is selected, operator absence verification is performed by the absence detection signal y4. When the manual operation is selected, the absence detection signal y4 is nullified, and the intention of the manual operation is verified by the manual operation signal y6.

If a state where the tablet is inserted in the position for generating the automatic operation signal y5 shows operator absence in the collision area (for example in the case where the machine-movable section 4 is surrounded by a fence, and a doorway cannot be opened without pulling out the tablet), then in FIG. 5, the absence detection signal y4 and the AND 1 can be omitted.

Next is a description of the generation of the signals x1 to x4 in the circuit shown in FIG. 5.

At first, in the circuit configuration shown in FIG. 5, in the case where a stop operation of the switch 21 is not performed, and the contact points of the switch 21 are closed, the manual stop operation signal y1 becomes a high level H, and hence the signal x1 becomes a high level H.

In this state, by means of the operation of the switch 22, the selection operation is performed for the automatic operation or manual operation.

### (Automatic operation)

In the case where the switch 22 is inserted in the automatic operation side, the automatic operation signal y5 becomes a high level H. This automatic operation signal y5 is supplied to the AND 1, and the logical product of this with the absence detection signal y4 is taken. In the case where the automatic operation is selected by this operation, operator absence verification is performed by the absence detection signal y4. Consequently, the logical product signal of a high level output from the AND 1 contains information indicating that automatic operation is selected, and that operator absence verification has been performed. This logical product signal is taken out via the OR 1 as the signal x2 (high level).

If a state where the tablet is inserted in the position for generating the manual operation signal y5 shows operator absence in the collision area (for example in the case where the machine-movable section 4 is surrounded by a fence, and a doorway cannot be opened without pulling out the tablet), then in FIG. 5, the absence detection signal y4 and the AND 1 can be omitted, and the automatic operation signal y5 may be taken out directly via the OR 1 as the signal x2.

Next, when the switch 31 is pressed so that the contact points are closed, the start operation signal y21 of a high level H is generated. This start operation signal y21 is taken out via the OR 2 as the signal x3 (high level).

Then, when the switch 41 is operated so that the contact points are closed, the machine side operation command signal y7 of a high level H is generated. This machine side operation command signal y7 is taken out via the OR 3 as the signal x4 (high level).

### (Manual operation)

When manual operation is selected, the absence detection signal y4 is nullified, and the intention of the manual operation is verified by the manual operation signal y6. That is to say, the switch 22 is inserted in the manual operation side, and the manual operation signal y6 becomes a high level H. This manual operation signal y6 is supplied to the OR 1, and is taken out via the OR 1 as the signal x2 (high level).

Next, when the switch 32 is pressed so that the contact points are closed, the start operation signal y22 of a high level H is generated. This start operation signal y22 is taken out via the OR 2 as the signal x3 (high level).

Then, when the switch 42 is operated so that the contact points are closed, the operation intention detection signal y3 of a high level H is generated. This operation intention detection signal y3 is taken out via the OR 3 as the signal x4 (high level).

The signals x1 to x4 generated in the above manner are supplied to the signal processing section 102 shown in FIG. 2.

Yet another separate embodiment of the control system for production facilities according to the present invention can include a monitoring section. The monitoring section monitors the operating range of the machine-movable section 4, and the speed of the machine-movable section 4, and supplies monitoring signals to the safety related circuit section 1.

According to this preferable embodiment, the safety at the time of manual operation can be further increased. In manual operation, the operator performs an operation assuming that the machine-movable section 4 performs a previously determined operation at a previously determined speed. There may be a case where, while performing the operation, an operator cannot be depended on to find an event where the machine-movable section 4 deviates from a prescribed range or deviates from a prescribed speed. In such a case, a monitoring function for detecting such events, instead of the operator is necessary.

According to this preferable embodiment of the invention, operation of the machine-movable section 4 becomes possible based on the operating intention of the operator, while verifying the operating condition of the machine-movable section 4. Therefore safety at the time of manual operation is improved.

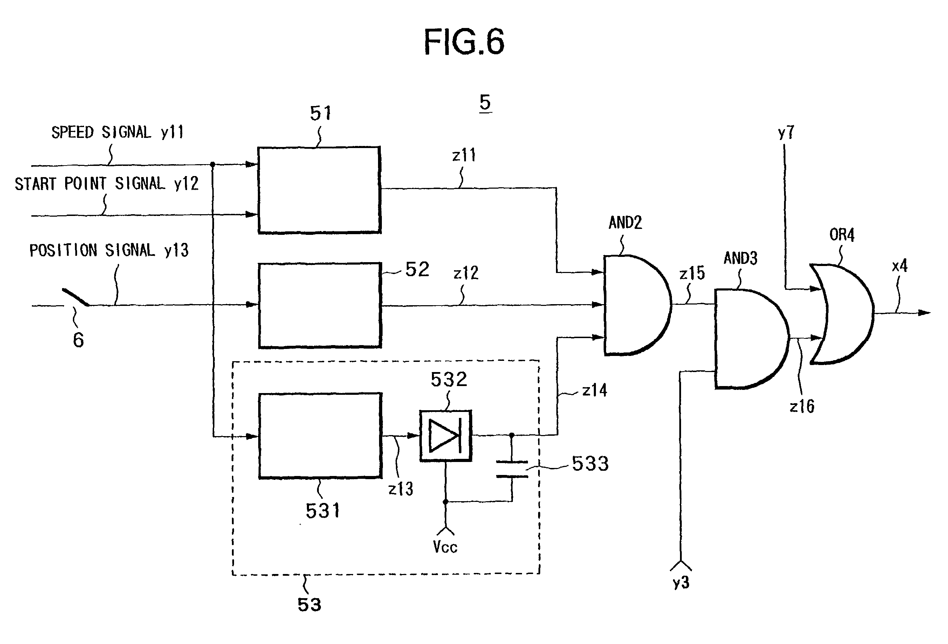

FIG. 6 is a block diagram showing a specific example of the above embodiment.

A monitoring section 5 takes a speed signal y11, a start point signal y12 and a position signal y13 as input signals, and outputs the signal x4. The speed signal y11 is a signal obtained by detecting the rotation speed of the machine-movable section 4 (refer for example to FIG. 1), with for example an encoder or the like,

The position signal y13 is obtained by an operation of a position switch 6. The position switch 6 is for detecting or verifying the operating range of the machine-movable section 4, and incorporates for example a forced separation structure (a switch for opening always the contact points thereof if the sensor section moves). Instead of the position switch 6, an encoder fitted with operation monitoring may be used.

The monitoring section 5 contains for example; a fault monitoring section 51, an overrun monitoring section 52, an over-speed monitoring section 53, an AND 2, an AND 3 and an OR 4. The fault monitoring section 51 takes the speed signal y11 and the start point signal y12 as input signals, and monitors for faults in the machine-movable section 4. The overrun monitoring section 52 detects overrun in the case where the machine-movable section 4 is operated exceeding the permissible range, from the position signal y13 obtained by the operation of the position switch 6. The over-speed monitoring section 53 takes the speed signal y11 as an input signal, and monitors if the machine-movable section 4 is in an over-speed condition.

In the case where all of the speed signal y11, the start point signal y12 and the position signal y13 are at normal values, signals z11, z12 and z14 respectively output from the fault monitoring section 51, the overrun monitoring section 52 and the over-speed monitoring section 53 are all at a high level H, and a signal z15 output from the AND 2 is at a high level H. Consequently, a signal z16 output from the AND 3, on condition that the operation intention detection signal y3 is a high level H, becomes a high level H. In the case where the signal z16 output from the AND 3 is a high level H, the signal x4 output from the OR 4 becomes a high level.

In the case where at least one of the speed signal y11, the start point signal y12 and the position signal y13 are not normal, the signal z15 output from the AND 2 becomes a low level L, and hence the signal z16 output from the AND 3 also becomes a low level L.

Since during operation, the machine side operation command signal y7 is a low level L, the signal x4 output from the OR 4 becomes a low level L. As a result, it can be detected that at least one of the speed signal y11, the start point signal y12 and the position signal y13 is abnormal.

Next is a description of the construction of the over-speed monitoring section 53.

The speed monitoring can be realized by an encoder fitted with function monitoring. However, in this embodiment, the description is given for the case when a delay circuit is used. That is to say, the over-speed monitoring section 53 shown in this embodiment contains an on-delay circuit 531. In a latter stage to the on-delay circuit 531, there is provided a rectifier circuit 532, and a capacitor 533 which becomes a trailing edge delay element.

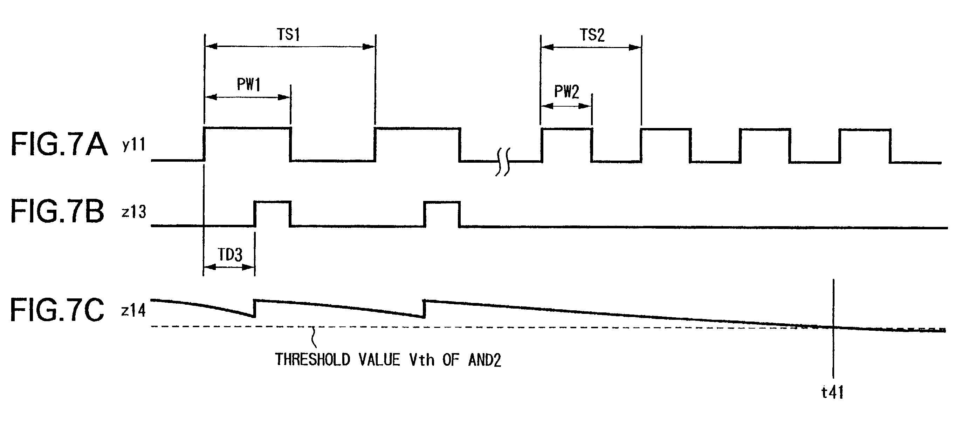

FIG. 7 is a waveform diagram for explaining the operation of the over-speed monitoring section 53 shown in FIG. 6.

In the case where the machine-movable section 4 operates at a permissible speed, the speed signal y1 becomes a pulse train of a period TS1 as shown in FIG. 7A. A pulse width PW1 of the period TS1 is selected so as to be longer than an on-delay time TD3 of the on-delay circuit 531. Consequently, in the case where the machine-movable section 4 is operating at a permissible speed, at the output side of the on-delay circuit 531, as shown in FIG. 7B, the pulse signal z13 is generated delaying by the on-delay time TD3 from the input time of the pulse of period TS1. Each time this pulse signal z13 is generated, the capacitor 533 constituting the trailing edge delay element, is charged through the rectifier circuit 532. A terminal voltage of the capacitor 533 is supplied to the AND 2 as the signal z14 (refer to FIG. 7C).

The signal z14 being the terminal voltage of the capacitor 533 drops with time. However before falling below a threshold value Vth of the AND 2, the next pulse signal z13 is generated and the capacitor 533 is charged. Consequently, the level of the signal z14 being the terminal voltage of the capacitor 533 does not drop below the threshold value Vth of the AND 2.

However, when the machine-movable section 4 falls under an over-speed condition, the speed signal y11, as shown in FIG. 7A, becomes a pulse train of a period TS2 shorter than the period TS1. If a pulse width PW2 of the period TS2 becomes shorter than the on-delay time TD3 of the on-delay circuit 531, then as shown in FIG. 7B the generation of the pulse signal z13 at the output side of the on-delay circuit 531 disappears. Therefore, the charging operation for the capacitor 533 disappears, and the signal z14 being the terminal voltage of the capacitor 533 drops with time, and as shown in FIG. 7C, at time t41, drops below the threshold value Vth of the AND 2. Consequently, the signal z15 output from the AND 2 becomes a low level, and the signal z16 output from the AND 3 also becomes a low level.

### INDUSTRIAL APPLICABILITY

The present invention enables simplification of safety evaluation of systems, with modifications of a non-safety related circuit section having no influence on safety evaluation of a safety related circuit section. Hence industrial applicability is significant.

## Claims

1. A control system for production facilities comprising a safety related circuit section and a non-safety related circuit section,
wherein said safety related circuit section and said non-safety related circuit section are isolated from each other circuitwise,
said safety related circuit section has a function for participating in collision avoidance between a machine-movable section and a person and is provided with a characteristic for generating high level energy only in the case where it is normal in itself and for generating low level energy when there is a fault in itself, and
said non-safety related circuit section has a function for controlling an operation of said machine-movable section and is related with said safety related circuit section so that a control of the operation of said machine-movable section is only possible when said safety related circuit section is generating the high level energy.

2. A control system for production facilities according to claim 1,
wherein said safety related circuit section is supplied with input signals including; an operator manual stop operation signal, a start operation signal based on manual or automatic operation, an absence detection signal indicative of operator absence from an area where collision is possible, and an operation intention detection signal for at the time of manual operation.

3. A control system for production facilities according to claim 2, further comprising a monitoring section monitoring an operating range of said machine-movable section, and a speed of said machine-movable section, and supplying a monitoring signal to said safety related circuit section.
